# EUROPÄISCHE PATENTSCHRIFT

(11) **EP 3 684 235 B1**
(45) Veröffentlichungstag und Bekanntmachung des Hinweises auf die Patenterteilung: **27.10.2021**
(21) Anmeldenummer: 18778861.7
(22) Anmeldetag: 20.09.2018
(51) Int. Cl.: A47J 37/04, A47J 37/06, A47J 37/07

(54) **MODULARES GRILLGERÄT**
MODULAR GRILL
APPAREIL DE CUISSON MODULAIRE

(30) Priorität: 20.09.2017 DE 102017121840
(43) Veröffentlichungstag der Anmeldung: 29.07.2020
(73) Patentinhaber: L&W Holding UG, 53572 Unkel (DE)
(72) Erfinder: LANGE, Thomas, 56333 Winningen (DE); WICHMANN, Stefan, 53572 Unkel (DE)
(74) Vertreter: Macliing, Trixia
(86) Internationale Anmeldenummer: PCT/EP2018/075458
(87) Internationale Veröffentlichungsnummer: WO 2019/057814

(56) Entgegenhaltungen:
- EP-A1- 2 901 901
- WO-A2-2007/127072
- DE-A1- 2 641 127
- DE-U1- 20 309 120
- DE-U1-202007 008 965
- FR-A1- 2 954 686
- GB-A- 2 445 622

## Beschreibung

### Technisches Gebiet

Die Erfindung betrifft ein modulares Grillgerät mit zumindest einer Grillkonfiguration zum Grillen von Grillgut und einer Tragekonfiguration zum Tragen des Grillgeräts. Das Grillgerät umfasst zumindest eine Heizfunktionsgruppe, ein austauschbares Heizmodul zum Erhitzen des Grillguts mit einer in der Grillkonfiguration vertikalen Abstrahlfläche und eine mit der Heizfunktionsgruppe verbundenen

Grillgutträgerfunktionsgruppe mit einem Grillgutträgermodul.

### Stand der Technik

Aus dem Stand der Technik sind Grillgeräte bekannt, welche jedoch schwer und oft mit einem externen Antrieb versehen sind, welcher zumeist stromgebunden ist. Somit sind diese Grillgeräte nur sehr eingeschränkt transportabel oder autark, also ohne Infrastruktur wie ein externes Stromnetz und Elektrokabel, benutzbar. Zudem sind gattungsgemäße Grillgeräte meist aufwändig zu bedienen, auf Spezialanwendungen beschränkt und nicht flexibel auf verschiedene Nutzungsarten anzupassen.

Die Gebrauchsmusterschrift DE202014001383U1 beschreibt einen Feuerkorb-Grill-Smoker, der sowohl mit Brennholz als auch mit Holzkohle, Holzkohlebriketts, Pellets oder Gas beheizt werden kann. Das Grillgut wird dabei beispielsweise in einer Pfanne oder auf einem Pizzastein auf den Feuerkorb aufgesetzt. Durch die nach oben offene Hitzequelle besteht die Gefahr, dass Grillgut oder Werkzeug in die Hitzequelle hineinfallen und verbrennen oder dass ein Bediener mit der Hitzequelle in Kontakt kommt und sich dabei verletzt.

Die Patentschrift DE19756317C2 offenbart eine zerlegbare, mobile, multifunktionelle, schnell funktionsbereite, zeitgleich in mehreren Funktionen zu betreibende, energiesparende, umweltfreundliche Garvorrichtung mit einsetzbaren Zusatzgeräten zum Grillieren, Braten, Backen, Kochen und Räuchern. Die Garvorrichtung ist sehr vielseitig, aber recht aufwändig aufzubauen und zu bedienen.

Die Patentschrift US3182585A beschreibt einen tragbaren Grill. Dieser Grill hat eine Grillkonfiguration zum Grillen von Grillgut und eine zusammengeklappte Tragekonfiguration zum Tragen des Grills. Der Grill umfasst zwei Brennstoffbehälter, die in der Grillkonfiguration horizontal oder vertikal ausgerichtet sein können, um Grillgut von unten und/oder von einer Seite zu erhitzen. Die Brennstoffbehälter haben jeweils eine Öffnung zum Befüllen mit Brennstoff, beispielsweise mit Kohle. Da die Öffnung nicht zu groß sein darf, damit der Brennstoff nicht bei Betrieb oder Transport des Grills herausfällt, gestalten sich das Befüllen mit Brennstoff und das Entfernen von Brennstoffresten schwierig.

Die Gebrauchsmusterschrift DE20309120U1 beschreibt einen Grill mit einer vertikalen Heizfläche.

### Technische Aufgabe

Die Aufgabe der Erfindung ist es, ein möglichst kostengünstig herzustellendes, vielseitig einsetzbares, tragbares sowie einfach und sicher zu bedienendes Grillgerät zu schaffen.

### Technische Lösung

Der Gegenstand der vorliegenden Erfindung stellt ein Grillgerät gemäß Anspruch 1 bereit, das die technische Aufgabe löst. Vorteilhafte

Ausgestaltungen ergeben sich aus den abhängigen Ansprüchen.

### Beschreibung der Ausführungsarten

Ein erfindungsgemäßes modulares Grillgerät hat zumindest eine Grillkonfiguration zum Grillen von Grillgut und einer Tragekonfiguration zum Tragen des Grillgeräts. Die Tragekonfiguration unterscheidet sich von der Grillkonfiguration beispielsweise dadurch, dass eine Ausdehnung und/oder ein Volumen des Grillgeräts in der Tragekonfiguration kleiner ist als in der Grillkonfiguration, der Grill also ein reduziertes Staumaß hat, oder dass in der Tragekonfiguration erhitzte und/oder verschmutzte Flächen des Grillgeräts verdeckt sind. Vorteilhaft an der Tragekonfiguration ist, dass sich das Grillgerät dadurch einfach und gefahrlos tragen lässt.

Ist das Grillgerät beispielsweise zumindest in der Tragekonfiguration nach unten dicht abgeschlossen, z.B. durch eine Abtropfwanne zur Aufnahme von Dreck und Flüssigkeit, so kann das Grillgerät auch bei nur vorläufiger und unvollständiger Reinigung schnell in einen reinzuhaltenden Raum wie den Kofferraum eines Autos verbracht werden.

Vorteilhafterweise kann das Grillgerät zumindest in der Tragekonfiguration so klein und leicht sein, dass es von einem einzelnen Menschen ohne Hilfsmittel getragen werden kann. Dafür kann in der Tragekonfiguration zum Beispiel eine maximale Ausdehnung des Grillgeräts unter 120 cm, insbesondere unter 60 cm, ein Volumen des Grillgeräts unter 0,5 m³ und/oder eine Masse des Grillgerätes unter 30 kg, insbesondere unter 15 kg, liegen.

Das Grillgerät umfasst zumindest eine Heizfunktionsgruppe, ein austauschbares Heizmodul zum Erhitzen des Grillguts mit einer in der Grillkonfiguration vertikalen Abstrahlfläche und eine mit der Heizfunktionsgruppe verbundenen Grillgutträgerfunktionsgruppe mit einem Grillgutträgermodul.

Eine vertikal ausgerichtete Abstrahlfläche bietet den Vorteil, dass kein Grillgut von der Grillgutträgerfunktionsgruppe auf die heiße Abstrahlfläche herabfallen kann, wo es unkontrolliert verbrennen könnte. Dadurch werden Verunreinigungen und/oder Beschädigungen der Heizfunktionsgruppe, Geruchsbelästigung und Brandgefahr vermieden.

Eine Länge und eine Breite der Abstrahlfläche sind vorteilhafterweise jeweils größer als eine Tiefe des Heizmoduls orthogonal zur Abstrahlfläche. Besonders vorteilhaft können die Länge und die Breite jeweils zumindest doppelt so groß, insbesondere zumindest viermal so groß, sein wie die Tiefe. Ein derart flach ausgestaltetes Heizmodul erlaubt es, einen großen Garraum gleichmäßig zu beheizen und ein geringes Volumen des Grillgeräts, insbesondere in der Tragekonfiguration, sicherzustellen.

Das Heizmodul kann beispielsweise eine elektrische Wärmequelle, eine Festbrennstoffheizquelle und/oder eine Gasheizquelle umfassen. Eine elektrische Wärmequelle, beispielsweise ein elektrischer Heizstrahler, bietet die Vorteile, dass bei ihrem Betrieb keine Abgase entstehen, dass sie besonders einfach und sicher zu bedienen ist und dass sie besonders flach ausgestaltet sein kann. Eine Gasheizquelle bietet den Vorteil, dass sie unabhängig von einer elektrischen Energiequelle betrieben werden kann. Eine Festbrennstoffheizquelle bietet den Vorteil, dass bei der Verbrennung des Festbrennstoffs freigesetzte Aromen den Geschmack des Grillguts positiv beeinflussen können.

Eine Gasheizquelle ist vorzugsweise als Gasheizstrahler ausgestaltet, da über die große Abstrahlfläche eines Gasheizstrahlers das Grillgut gleichmäßig erhitzt werden kann. Ein Heizmodul mit einer Gasheizquelle umfasst vorzugsweise ein Gasreservoir, beispielsweise eine Gaskartusche, sodass das Heizmodul ohne Anschluss an eine externe Gasversorgung betreibbar ist. Dadurch ist der Betrieb des Grillgerätes besonders einfach und sicher.

Ein Heizmodul mit einer Gasheizquelle umfasst vorzugsweise zumindest ein Ventil zur Einstellung eines Gasflusses zu der Gasheizquelle, wobei das Ventil vorzugsweise elektrisch, beispielsweise von einem Steuerungsmodul des Grillgerätes, steuerbar ist. Ein elektrisch steuerbares Ventil ist vorteilhafterweise so ausgelegt, dass in einem spannungslosen Zustand den Gasfluss unterbindet, sodass, beispielsweise bei einem Ausfall des Steuerungsmoduls, oder wenn das Heizmodul von dem Grillgerät getrennt wird, kein Gas unkontrolliert austritt.

Die Heizfunktionsgruppe umfasst zumindest eine Führungsvorrichtung zur Führung des Heizmoduls und eine Anzahl von Befestigungselementen zur lösbaren Befestigung des Heizmoduls an der Heizfunktionsgruppe.

Lösbar bedeutet im Sinne der Erfindung zerstörungsfrei, also ohne Beschädigung von Komponenten des Grillgeräts, lösbar, sodass voneinander gelöste Komponenten wieder miteinander verbunden werden können. Vorzugsweise ist eine lösbare Verbindung ohne Werkzeug lösbar.

Wenn das Heizmodul lösbar mit der Heizfunktionsgruppe verbindbar ist, kann es von dem Grillgerät getrennt werden, beispielsweise zu Wartungs-, Reinigungs- und/oder Reparaturzwecken oder um unterschiedliche Heizmodule, zum Beispiel mit unterschiedlichen Brennstoffen oder elektrisch betriebene Heizmodule, mit dem Grillgerät zu verwenden. Dadurch ist das Grillgerät besonders vielseitig einsetzbar und einfach handhabbar. Vorteilhafterweise können auch weitere Module, insbesondere das Grillgutträgermodul von dem Grillgerät lösbar ausgestaltet sein.

Der Vorteil des modularen Aufbaus des Grillgeräts zeigt sich am Beispiel des Heizmoduls daran, dass es beispielsweise möglich ist, unter Beibehaltung der übrigen Funktionsgruppen und Module unterschiedliche Heizmodule mit dem gleichen Grillgerät zu verwenden. Zum Beispiel kann ein elektrisches Heizmodul für eine stationäre Verwendung des Grillgeräts, insbesondere in einem Gebäude, und ein gas- oder kohlebetriebenes Heizmodul für eine mobile Verwendung des Grillgeräts, insbesondere im Freien, vorgesehen sein.

Ferner können durch den modularen Aufbau des Grillgeräts mit einem erfindungsgemäßen Grillgerät durch Austausch einzelner oder mehrerer Module alle Arten des Grillens, insbesondere Hochtemperaurgrillen, direktes Grillen, indirektes Grillen, Plankengrillen, Smoken und Räuchern realisiert werden. Dies macht das erfindungsgemäß modulare Grillgerät flexibler und gegenüber mehreren herkömmlichen Spezial-Grillgeräten günstiger und praktischer.

Zur lösbaren Befestigung können die Befestigungselemente beispielsweise Steck-, Rast- oder Klemmverbinder aufweisen. Dadurch wird eine besonders einfache Lösbarkeit bei gleichzeitiger Stabilität des Grillgeräts gewährleistet.

Die Führungsvorrichtung erlaubt einen besonders einfach und sicheren Ein- und Ausbau des Heizmoduls, beispielsweise indem das Heizmodul seitlich in die Heizfunktionsgruppe eingeschoben wird, ohne dass das Heizmodul mit der Heizfunktionsgruppe verkanten oder herunterfallen könnte. Insbesondere bei einem schweren und/oder heißen Heizmodul ist eine Führungsvorrichtung für eine sichere Benutzung des Grillgerätes von Bedeutung.

Die Führungsvorrichtung kann beispielsweise ein Schienensystem umfassen, an dem dazu passende Gleitflächen oder Rollen des Heizmoduls geführt werden.

Das Grillgutträgermodul umfasst zumindest einen in der Grillkonfiguration vor der Abstrahlfläche um eine vertikale Drehachse drehbar gelagerten Grillgutträger zur Aufnahme des Grillguts. Insbesondere ist dabei der zur Aufnahme des Grillguts vorgesehene Teil des Grillgutträgermoduls vor der Abstrahlfläche angeordnet.

Ein drehbar gelagerter Grillgutträger hat den Vorteil, dass das Grillgut auf einfache Weise, insbesondere ohne Nutzereingriff, von allen Seiten gleichmäßig gegrillt wird.

Der Grillgutträger kann beispielsweise wie das in der Veröffentlichung WO2016/091371A2 beschriebene Grillgutträgerelement ausgestaltet sein.

Die Heizfunktionsgruppe und die Grillgutträgerfunktionsgruppe können über eine Anzahl von Verbindungselementen lösbar und/oder beweglich miteinander verbunden sein. Durch eine lösbare Verbindung können die Funktionsgruppen, beispielsweise zum Transport, zur einfachen Reinigung oder zum Austausch einer Funktionsgruppe voneinander getrennt werden, wodurch das Grillgerät besonders vielseitig und einfach zu nutzen ist. Eine bewegliche Verbindung erlaubt beispielsweise eine Überführung des Grillgeräts von einem Grillzustand in einen platzsparenden Transportzustand oder eine Einstellung eines Abstands zwischen dem Grillgut und der Abstrahlfläche, um so den Grillvorgang zu steuern.

Die Verbindungselemente können beispielsweise als Teleskopverbinder, Schienensystem, Rastpartner, Gelenke, Scharniere, kraftschlüssige Klemmen und/oder, vorzugsweise bolzengesicherte, Steckverbindungen ausgebildet sein.

Zumindest eines der Befestigungselemente und/oder Verbindungselemente kann zur Ausbildung einer thermisch von heißen Abschnitten der Grillvorrichtung durch ein Isoliermittel entkoppelten Verbindung ausgelegt. Durch solche thermisch entkoppelten Verbinder können Module und/oder Funktionsgruppen im erhitzten Zustand des Grillgerätes gefahrlos voneinander getrennt werden, beispielsweise um ein Modul oder eine Funktionsgruppe zu warten, zu reinigen, zu reparieren oder auszutauschen.

Zumindest eines der Befestigungselemente und/oder Verbindungselemente kann eine Sperrvorrichtung zum Blockieren der Lösbarkeit und/oder der Beweglichkeit des jeweiligen Elements oberhalb einer voreingestellten Sperrtemperatur des Elements umfassen. Dadurch wird eine Lösung oder Bewegung bei zu hoher Temperatur, die zu einer Verletzung eines Nutzers führen könnte, verhindert. Die Sperrvorrichtung kann beispielsweise durch thermische Verformung eines Sperrelements, beispielsweise eines Bimetalls, bei einem Überschreiten der Sperrtemperatur in einen Sperrzustand übergehen.

Zumindest eines der Befestigungselemente und/oder Verbindungselemente kann eine Temperaturanzeige umfassen zur Anzeige einer Temperatur des Elements umfassen. Auch die Temperaturanzeige kann einen Nutzer vorteilhafterweise davon abhalten, das jeweilige Element bei zu hoher Temperatur zu lösen oder zu bewegen. Die Temperaturanzeige kann beispielsweise ein Überschreiten einer Sperrtemperatur durch einen Farbumschlag, beispielsweise von einer Flüssigkristallanzeige, anzeigen.

Die Grillgutträgerfunktionsgruppe kann eine Anzahl von Befestigungselementen zur lösbaren Befestigung des Grillgutträgermoduls an der Grillgutträgerfunktionsgruppe und bevorzugt eine Führungsvorrichtung zur Führung des Grillgutträgermoduls umfasst. Daraus ergeben sich analoge Vorteile und Ausgestaltungsmöglichkeiten wie durch die vorgenannten Befestigungselemente und die vorgenannte Führungsvorrichtung für das Heizmodul.

Das Heizmodul umfasst zumindest ein Anschlusselement zum elektrisch leitenden Anschluss des Heizmoduls an ein zu dem Anschlusselement komplementäres Gegenelement der Heizfunktionsgruppe. Vorzugsweise ist das Anschlusselement als Buchse und das Gegenelement als zu der Buchse komplementärer Stecker ausgebildet, weil ein, insbesondere vorstehender, Stecker an dem Heizmodul leicht beschädigt werden könnte, beispielsweise wenn das Heizmodul in das Grillgerät eingebaut oder daraus ausgebaut wird, oder wenn das Heizmodul außerhalb des Grillgerätes gelagert oder transportiert wird.

Durch das Anschlusselement werden elektrische Steuersignale und/oder Messsignale und/oder ein elektrischer Versorgungsstrom, beispielsweise von einem Steuerungsmodul und/oder einem Energieversorgungsmodul des Grillgerätes an das Heizmodul und/oder von dem Heizmodul an das Steuerungsmodul übertragen.

Beispielsweise kann zumindest eine der folgenden Funktionen mit Hilfe das Anschlusselements ausgeführt werden: eine elektrische Wärmequelle des Heizmoduls kann über das Anschlusselement mit elektrischem Strom versorgt werden; ein Gasventil einer Gasheizquelle des Heizmoduls kann über das Anschlusselement gesteuert werden; eine elektrische Zündvorrichtung einer Gasheizquelle oder einer Festbrennstoffheizquelle des Heizmoduls kann über das Anschlusselement angesteuert werden, Messsignale zu einer Temperatur des Heizmoduls oder einem Füllstand eines Gasreservoirs des Heizmoduls können über das Anschlusselement ausgelesen werden.

Das Anschlusselement und Gegenelement ermöglichen vorteilhafterweise eine Übertragung von elektrischen Steuersignalen, Messsignale und/oder Versorgungsstrom, ohne dass dazu eine separate Stromleitung an das Heizmodul angeschlossen werden müsste, sodass die Bedienung des Grillgerätes einfacher, weniger fehleranfällig und sicherer ist.

Vorzugsweise ist das Gegenelement in die Führungsvorrichtung der Heizfunktionsgruppe integriert. Dadurch lässt sich das Anschlusselement besonders einfach und zuverlässig, insbesondere ohne zu verkanten, mit dem Gegenelement verbinden.

Vorzugsweise können andere Module, beispielsweise das Grillgutträgermodul, ein Antriebsmodul, ein Energieversorgungsmodul, ein Beleuchtungsmodul, ein Steuerungsmodul oder ein Aromamodul, mit jeweils zumindest einem analog ausgestalteten und wirkenden Anschlusselement versehen sein, wie exemplarisch für das Heizmodul beschrieben. Vorteilhafterweise sind dann die Heizfunktionsgruppe, die Grillgutträgerfunktionsgruppe und/oder eine Gehäusefunktionsgruppe mit entsprechenden Gegenelementen ausgestattet, sodass jeweils ein Anschlusselement eines der Module mit zumindest einem Gegenelement einer Funktionsgruppe elektrisch leitend verbunden werden kann.

Das Heizmodul kann einen Festbrennstoff, beispielsweise Holz, Holzkohle und/oder Kohle, umfassen. Das Heizmodul kann eine den Festbrennstoff einschließende Umhüllung umfassen, wobei die Umhüllung bevorzugt zumindest im Bereich der Abstrahlfläche wärmedurchlässig ist. Durch eine Umhüllung, beispielsweise aus einem hitzebeständigen Material wie Stahl oder Aluminium, wird verhindert, dass der Festbrennstoff im unverbrannten oder auch im verbrannten Zustand unkontrolliert austritt, wodurch es zu Verbrennungen und Verschmutzungen kommen könnte.

Die Wärmedurchlässigkeit im Bereich der Abstrahlfläche kann beispielsweise dadurch sichergestellt sein, dass die Umhüllung Durchbrechungen aufweist und/oder aus einem wärmeleitenden Material, insbesondere einem Metall, besteht. Ein in der Grillkonfiguration und/oder Transportkonfiguration unterer Bereich der Umhüllung kann als, vorzugsweise fluiddichte und/oder wärmedämmende, Auffangschale beispielsweise für Asche, Reinigungsflüssigkeit und/oder Löschflüssigkeit ausgebildet sein.

Das Heizmodul kann eine Zündvorrichtung zum Entzünden eines Brennstoffs, insbesondere des Festbrennstoffs einer Festbrennstoffheizquelle oder des Gases einer Gasheizquelle, umfassen. Eine, beispielsweise elektrische oder piezoelektrische Zündvorrichtung erlaubt eine einfache und sichere Entzündung des Festbrennstoffs, insbesondere von einem Steuerungsmodul der Grillvorrichtung gesteuert.

Um eine zuverlässige und vollständige Entzündung des Festbrennstoffs einer Festbrennstoffheizquelle sicherzustellen, kann ein Heizmodul mit Festbrennstoffheizquelle eine Zündhilfe, beispielsweise einen chemischen Grillanzünder, enthalten.

Das Heizmodul kann eine, vorzugsweise von der Umhüllung gesonderte, Auffangvorrichtung zur Aufnahme von Verbrennungsrückständen des Festbrennstoffs umfassen. Die Auffangvorrichtung kann beispielsweise eine in der Grillkonfiguration unterhalb des Festbrennstoffs angeordnete Wanne, Schale oder Schublade umfassen.

Durch die Auffangvorrichtung wird verhindert, dass Verbrennungsrückstände wie Asche unkontrolliert aus dem Heizmodul austreten und für Verschmutzungen sorgen. Vorteilhafterweise umfasst die Auffangvorrichtung eine Verschlussvorrichtung, beispielsweise einen Deckel, durch die die Verbrennungsrückstände, insbesondere wenn das Heizmodul von dem Grillgerät gelöst wird und/oder wenn sich das Grillgerät in der Transportkonfiguration befindet, in der Auffangvorrichtung eingeschlossen werden.

Das Heizmodul kann eine Anzahl von, insbesondere verstellbaren, Belüftungsöffnungen, beispielsweise an einer einem Garraum des Grillgeräts in der Grillkonfiguration zugewandten und/oder dem Garraum in der Grillkonfiguration abgewandten Seite des Heizmoduls, umfassen.

Durch Belüftungsöffnungen wird eine ausreichende Sauerstoffzufuhr für eine saubere Verbrennung des Festbrennstoffs und eine hohe Hitzeentwicklung sichergestellt. Wenn die Belüftungsöffnungen bezüglich ihrer Gasdurchlässigkeit verstellbar sind, kann dadurch die Sauerstoffzufuhr und somit die Hitzeentwicklung des Heizmoduls global oder auch lokal gesteuert werden. Insbesondere kann eine homogene Hitzeentwicklung über die Abstrahlfläche erreicht werden.

Die Belüftungsöffnungen können beispielsweise manuell und/oder automatisch, beispielsweise mit elektromechanischen Aktuatoren, eingestellt werden. Einstellbare Belüftungsöffnungen können vorteilhafterweise in der Tragekonfiguration geschlossen sein, beispielsweise um ein Austreten von Festbrennstoff und/oder Verbrennungsrückständen zu verhindern.

Die Belüftungsöffnungen können Zuluftöffnungen zur Einleitung von Gas in das Heizmodul und Abluftöffnungen zur Ausleitung von Gas aus dem Heizmodul umfassen. In der Grillkonfiguration sind vorteilhafterweise die Zuluftöffnungen vorteilhafterweise in einem unteren Bereich des Heizmoduls und die Abluftöffnungen in einem oberen Bereich des Heizmoduls angeordnet.

Durch unterschiedliche Anordnungen und/oder Einstellungen der Belüftungsöffnungen auf der dem Garraum zugewandten und der dem Garraum abgewandten Seite des Heizmoduls kann das Grillgerät für unterschiedliche Nutzungsarten eingestellt werden. Beispielsweise können für einen Räucherbetrieb geöffnete Abluftöffnungen auf der dem Garraum zugewandten Seite und/oder für eine möglichst hohe Sauerstoffzufuhr und somit hohe Hitzeentwicklung geöffnete Zuluftöffnungen auf der dem Garraum abgewandten Seite angeordnet sein.

Zumindest ein Modul der Grillvorrichtung kann eine Anzahl von Griffelementen umfassen. Griffelemente und/oder eine Außenfläche eines Moduls können durch ein Isoliermittel von einer mechanisch mit ihnen verbundenen Heizquelle des Grillgeräts thermisch entkoppelt sein. Durch Griffelemente kann das Modul und/oder das Grillgerät besonders einfach getragen werden.

Durch das Isoliermittel, beispielsweise eine thermische Reflexionsschicht, ein Dämmmaterial und/oder ein Gas, insbesondere Luft, wird verhindert, dass sich die Griffelemente und/oder die Außenfläche zu stark erhitzen. Dadurch wird die Gefahr von Verbrennungen für einen Nutzer des Grillgeräts reduziert. Ferner kann das Isoliermittel einen Wärmeverlust aus einem Garraum des Grillgeräts verringern, sodass der Garvorgang effizienter erfolgt und/oder eine weniger leistungsfähige und somit kleinere, leichtere und/oder kostengünstigere Heizquelle verwendet werden kann.

Das Grillgerät kann eine zumindest einen Garraum des Grillgerätes umschließende Gehäusefunktionsgruppe umfassen. Die Gehäusefunktionsgruppe kann über eine Anzahl von Verbindungselementen lösbar mit der Heizfunktionsgruppe und/oder der Grillgutträgerfunktionsgruppe verbunden sein. Die Verbindungselemente können analog zu den Verbindungselementen zwischen Heizfunktionsgruppe und Grillgutträgerfunktionsgruppe ausgestaltet sein, woraus sich analoge Vorteile ergeben.

Die Gehäusefunktionsgruppe kann eine Mehrzahl von Gehäuseelementen umfassen, wobei die Gehäuseelemente beispielsweise ein linkes Seitenwandelement, ein rechtes Seitenwandelement, ein Rückwandelement, ein Vorderwandelement, ein Bodenelement und/oder ein Deckenelement umfassen können.

Das Grillgerät kann geschlossen ausgestaltet sein und alle genannten Gehäuseelemente umfassen. Alternativ kann das Grillgerät offen ausgestaltet sein, wobei zumindest ein Gehäuseelement fehlt. Ein geschlossenes Grillgerät hat die Vorteile eines geringen Wärmeverlustes aus dem Garraum und einer geringen Gefahr für einen Nutzer, mit heißen und/oder verschmutzten Oberflächen des Grillgeräts in Kontakt zu kommen. Ein offenes Grillgerät hat den Vorteil einer guten Zugänglichkeit des Garraums, sodass dieser schnell und einfach mit dem Grillgut bestückt werden kann, sowie auch einer unbehinderten und verbrennungsförderlichen Sauerstoffzufuhr zum Ort eines Verbrennungsprozesses.

Das Deckenelement kann eine, insbesondere beheizbare, Ablagefläche für das Grillgut umfassen. Die Ablagefläche erlaubt es, darauf abgelegtes Grillgut warmzuhalten und oder zu garen. Vorteilhafterweise ist die Ablagefläche durch eine thermische Kopplung mit dem Heizmodul beheizt. Insbesondere kann die thermische Kopplung, beispielsweise durch Einstellung der Größe einer Kontaktfläche und/oder eines Abstandes zwischen der Ablagefläche und dem Heizmodul, einstellbar sein.

Vorteilhafterweise kann die Ablagefläche mehrere Abschnitte umfassen, die eine unterschiedliche und/oder unterschiedlich einstellbare thermische Kopplung mit dem Heizmodul aufweisen. Dadurch kann die Ablagefläche beispielsweise gleichzeitig in einem ersten (thermisch schwach angekoppelten) Abschnitt zum Warmhalten und/oder in einem zweiten (thermisch stark angekoppelten) Abschnitt zum Garen von Grillgut und/oder in einem dritten (thermisch isolierten) Abschnitt als Abstellfläche für nicht zu erhitzende Gegenstände benutzt werden.

Gemäß einer besonderen Ausgestaltung der Erfindung kann ein Thermokoppler vorgesehen werden, um die thermische Ankopplung der Ablagefläche vorzugsweise abschnittsweise einzustellen und/oder zu regeln, wie beispielsweise bei einer Heizplatte eines Küchenherdes.

Insbesondere das Rückwandelement kann zumindest abschnittsweise von dem Heizmodul gebildet sein. Dadurch ist das Heizmodul in der Grillkonfiguration in einem rückwärtigen Bereich des Grillgeräts angeordnet, wodurch die Gefahr von Verbrennungen an dem Heizmodul für einen Nutzer des Grillgeräts reduziert wird.

Insbesondere das Vorderwandelement kann eine Öffnung zur Bestückung des Grillgeräts mit dem Grillgut und insbesondere eine Tür zum Verschluss der Öffnung umfassen. Durch eine Tür werden eine einfache Bestückung des Grillgeräts und ein geringer Wärmeverlust aus dem Garraum erreicht.

Zumindest eines der Gehäuseelemente kann faltbar ausgestaltet und/oder klappbar mit einem weiteren Gehäuseelement verbunden sein. Dadurch kann das Gehäusemodul und somit das Grillgerät aus der Grillkonfiguration in eine besonders platzsparende Tragekonfiguration überführt werden.

Das Gehäusemodul kann einen Ventilator zur Bewegung von Luft in einem Garraum des Grillgeräts umfassen. Durch den Ventilator kann eine gleichmäßige Wärmeverteilung in dem Garraum und somit ein gleichmäßiges Garen des Grillguts erreicht werden.

Der zumindest eine Grillgutträger kann höhenverstellbar und/oder lösbar, an einem Halteelement befestigt sein. Insbesondere können mehrere, beispielsweise zwei, drei oder vier, Grillgutträger an dem gleichen Halteelement befestigt sein. Eine lösbare und/oder höhenverstellbare Befestigung des Grillgutträgers bringt den Vorteil, dass der oder die Grillgutträger je nach Art, Größe und Menge des Grillgutes variabel in der Grillvorrichtung angeordnet werden können. Weiterhin können die Grillgutträger, zum Beispiel zur Reinigung und/oder Bestückung, einfach entnommen und schnell und sicher wieder eingebaut werden.

Der Grillgutträger kann insbesondere so ausgestaltet sein wie der in der Anmeldung DE102016007671A1 beschriebene Grillgutträger.

Der zumindest eine Grillgutträger weist vorteilhafterweise einen Halteabschnitt auf, mit dem der Grillgutträger eine lösbare Verbindung, beispielsweise eine Rast-, Schraub-, Steck- oder Klemmverbindung mit dem Halteelement eingehen kann.

Das Halteelement kann beispielsweise L-förmig und/oder ein-, zwei- oder mehrstückig ausgestaltet sein. Im Fall einer L-Form ist der längere Schenkel in der Grillkonfiguration vorzugsweise vertikal und parallel zu der Drehachse versetzt ausgerichtet, und der kürzere Schenkel ist in der Grillkonfiguration horizontal ausgerichtet. Die Verbindung der L-Schenkel kann als Winkel oder als Bogen ausgeführt sein.

Zur Gewichtsersparnis ist das Halteelement vorzugsweise aus Aluminium und/oder hohl ausgestaltet.

Das Halteelement kann vertikal voneinander beabstandete Vertiefungen, Öffnungen und/oder Vorsprünge für eine sichere Positionierung des Grillgutträgers aufweisen.

Das Halteelement kann einen runden Querschnitt aufweisen, damit es besonders einfach herzustellen und zu reinigen ist. Alternativ kann das Halteelement einen elliptischen, dreieckigen, viereckigen oder mehreckigen Querschnitt aufweisen, um eine unbeabsichtigte Drehung des Grillgutträgers um das Halteelement zu vermeiden.

Das Halteelement kann insbesondere so ausgestaltet sein wie das in der Anmeldung DE102016007671A1 beschriebene Halteelement.

Der zumindest eine Grillgutträger oder das Halteelement können, bevorzugt lösbar, an der Drehachse befestigt sein. Eine lösbare, beispielsweise gesteckte, geklemmte und/oder geschraubte, Befestigung bringt den Vorteil, dass unterschiedliche Grillgutträger und/oder Halteelemente leicht gegeneinander ausgetauscht werden können.

Die Drehachse kann, bevorzugt in einem Abschnitt der Drehachse unterhalb des Grillgutträgers, in einer Führ- und Lagereinheit, bevorzugt in zumindest zwei vertikal voneinander beabstandeten Lagern, besonders bevorzugt Kugellagern, geführt und gelagert sein. Dadurch, dass die Achse nur in einem Abschnitt unterhalb des Grillgutträgers geführt und gelagert wird, wird ein einfacherer Aufbau der Grillvorrichtung erreicht als bei einer Führung und/oder Lagerung unterhalb und oberhalb des Grillgutträgers. Weiterhin ist eine Führ- und Lagereinheit unterhalb des Grillgutträgers einer geringeren Wärmebelastung ausgesetzt als oberhalb, wodurch die Lebenserwartung der Führ- und Lagereinheit erhöht wird.

Um trotz der nur einseitigen Führung insbesondere auch bei inhomogener Beladung des Grillgutträgers eine hohe Stabilität zu erreichen, ist eine Führung mit möglichst geringem Spiel vorteilhaft, wie sie beispielsweise durch zwei vertikal voneinander beabstandete Kugellager erreicht wird. Anstelle von zwei Kugellagern kann auch ein zweireihiges Kugellager, ein Kugellager mit geringer Lagerluft, ein Nadellager und/oder eine Kombination aus einem Wälzlager mit einer Führungsbuchse eingesetzt werden. Besonders vorteilhaft kann die Führ- und Lagereinheit gegen das Eindringen von Fremdkörpern, beispielsweise Flüssigkeit aus dem Grillgut, geschützt sein. Der Schutz kann zum Beispiel durch die Verwendung gekapselter Kugellager sichergestellt werden.

Die Drehachse kann insbesondere so ausgestaltet sein wie die in der Anmeldung DE102016007671A1 beschriebene Achse.

Der Grillgutträger kann zumindest ein Rost und/oder Blech zur Aufnahme des Grillguts umfassen, wobei das Grillgutträgermodul bevorzugt eine Anzahl von Einschüben zur Aufnahme des Rosts oder Blechs umfasst. In dieser Ausgestaltung kann das Grillgutträgermodul besonders einfach aufgebaut sein und durch unterschiedliche Positionierung des Rosts oder Blechs für unterschiedliche Arten von Grillgut verwendet werden.

Das Grillgerät kann zumindest ein Antriebsmodul zur Drehung des zumindest einen Grillgutträgers um die Drehachse umfassen, wobei die Grillgutträgerfunktionsgruppe vorzugsweise eine Anzahl von Befestigungselementen zur lösbaren Befestigung, und insbesondere eine Führungsvorrichtung zur Führung, des Antriebsmodul an der Grillgutträgerfunktionsgruppe umfasst. Daraus ergeben sich analoge Vorteile und Ausgestaltungsmöglichkeiten wie durch die vorgenannten Befestigungselemente und die vorgenannte Führungsvorrichtung für das Heizmodul.

Das Antriebsmodul kann zumindest einen Motor, besonders bevorzugt einen Elektromotor, zur Drehung eines Grillgutträgers umfassen.

Das Antriebsmodul kann vorteilhafterweise in der Grillkonfiguration unterhalb des zumindest einen Grillgutträgers angeordnet sein, da hierdurch ein einfacher Aufbau und eine hohe Standfestigkeit der Grillvorrichtung erzielt werden, und das Antriebsmodul nicht durch die von dem Heizmodul aufsteigende Hitze beschädigt werden kann.

Ein erfindungsgemäßes Antriebsmodul kann dazu ausgelegt sein, den zumindest einen Grillgutträger in Rotation mit einstellbarer Geschwindigkeit und/oder einstellbarem Geschwindigkeitsprofil zu versetzen. Je nach Grillgut kann eine schnellere oder langsamere Rotation für ein optimales Grillergebnis vorteilhaft sein, sodass die Grillvorrichtung durch eine einstellbare Rotationsgeschwindigkeit flexibler eingesetzt werden kann.

Insbesondere können auch verschiedene Garphasen eines Grillguts unterschiedliche Rotationsgeschwindigkeiten erfordern. Daher ist eine Rotation mit einstellbarem Geschwindigkeitsprofil, das heißt mit einer definierten Abfolge von unterschiedlichen Geschwindigkeiten, besonders vorteilhaft für ein optimales Grillergebnis. Eine einstellbare Rotationsgeschwindigkeit lässt sich besonders einfach mit einem Elektromotor mit einstellbarer Versorgungsspannung realisieren.

Das Grillgerät kann zumindest ein Energieversorgungsmodul zur Versorgung zumindest einer Funktionsgruppe des Grillgeräts mit Energie umfassen, wobei die Grillgutträgerfunktionsgruppe vorzugsweise eine Anzahl von Befestigungselementen zur lösbaren Befestigung, und insbesondere eine Führungsvorrichtung zur Führung, des Energieversorgungsmoduls an der Grillgutträgerfunktionsgruppe umfasst. Daraus ergeben sich analoge Vorteile und Ausgestaltungsmöglichkeiten wie durch die vorgenannten Befestigungselemente und die vorgenannte Führungsvorrichtung für das Heizmodul.

Erfindungsgemäß kann jeder, auch ein herkömmlicher, Grill mit dem Energieversorgungsmodul ausgerüstet werden.

Das Energieversorgungsmodul kann zumindest einen Energiespeicher, insbesondere eine Batterie und/oder einen Akkumulator, umfassen. Aus diesem Energiespeicher kann beispielsweise das - vorteilhafterweise sparsam ausgelegte - Antriebsmodul über einen längeren Zeitraum, insbesondere länger als die typische Dauer eines Einsatzes des Grillgerätes, mit Energie versorgt werden. Durch den Energiespeicher wird eine autarke Energieversorgung realisiert, die es erlaubt, das das Grillgerät ohne externe Energiequelle, wie beispielsweise eine elektrische Steckdose, zu betreiben. Daraus ergibt sich der Vorteil, dass das Grillgerät an einem beliebigen Ort, insbesondere einem Ort ohne Energieversorgungsinfrastruktur wie einem abgelegenen Campingplatz, eingesetzt werden kann.

Für einen möglichst einfachen Aufbau der Grillvorrichtung kann aber auch ein Energieversorgungsmodul ohne Energiespeicher, das für seinen Betrieb auf eine externe Energiequelle angewiesen ist, vorgesehen sein.

Das Energieversorgungsmodul kann zumindest eine Energiegewinnungseinheit zur lokalen Energiegewinnung, besonders bevorzugt zumindest ein Windrad, einen, zum Beispiel fußbetriebenen, Dynamo, ein Photovoltaik-Modul, wie beispielsweise ein Solarpanel, und/oder eine Vorrichtung zur Wandlung von thermischer Energie in elektrische und/oder mechanische Energie, wie beispielsweise ein auf der Nutzung einer Temperaturdifferenz beruhenden thermoelektrischer Generator bzw. ein Peltier-Element, umfassen.

Beispielsweise kann ein Peltier-Element bzw. Element zur Nutzung des Seebeck-Effekts an einen heißen Abschnitt des Grillgeräts und einen kälteren Abschnitt des Grillgeräts und/oder der Umgebung thermisch durch in ihrer elektronischen Wärmekapazität, Wärmestromtragfähigkeit und/oder ihrem Seebeck-Koeffizienten verschiedene Leiter angekoppelt werden, um auch ohne externe Stromversorgung oder unabhängig von Wind- oder Solarenergiezufuhr autark, weil allein aus der Wärmentwicklung des Grills, elektrische Energie zu gewinnen, deren Leistung zumindest zum Betreiben des Antriebsmoduls hinreicht. Zu Details wird auf den Inhalt der Webseiten http://peltier-element.de/funktionsweise-peltier-element.html und https://www.energie-lexikon.info/thermoelektrischer_generator.html mit Stand des 18.09.2017 verwiesen.

Ein thermoelektrischer Generator in einem Grillgerät hat den Vorteil, dass er die immer und ohnehin im Grillbetrieb entstehende Temperaturdifferenz zwischen Abschnitten des Grillgeräts zur Stromgewinnung und mittelbar zur Stromumsetzung in die mechanische Bewegung eines Aktuators nutzbar macht und zudem aus einhausbaren, unbeweglichen Komponenten besteht, die somit robust, fest und/oder störunanfällig am Grillgerät verbaut werden können.

Über die Energiegewinnungseinheit kann insbesondere der Energiespeicher vor oder auch während einem Einsatz der Grillvorrichtung aufgeladen werden. Die Energiegewinnungseinheit bietet den besonderen Vorteil, dass sie ohne externe Energieversorgung funktioniert.

Ein Windrad kann neben atmosphärischem Wind auch den von der Heizfunktionsgruppe erzeugten Aufwind zur Stromerzeugung nutzen. Ein Peltier-Element kann aus einer von der Heizfunktionsgruppe erzeugten Temperaturdifferenz elektrischen Strom erzeugen. Damit ist es wie ein Aufwind-Windrad und im Gegensatz zu einem Windrad für atmosphärischen Wind oder einem Photovoltaik-Modul unabhängig von den Umgebungsbedingungen der Grillvorrichtung wie Windstärke oder Helligkeit. Photovoltaik-Modul und Peltier-Element haben den gemeinsamen Vorteil, ohne bewegliche Teile auszukommen, was einen wartungsarmen Betrieb und eine lange Lebensdauer ermöglicht, wobei sie zudem mit einer Einhausung geschützt werden können.

Das Energieversorgungsmodul kann zumindest einen Netzanschluss zum Anschluss des Energieversorgungsmoduls an ein Energieversorgungsnetz umfassen. Der Netzanschluss kann zum Beispiel ein Stromkabel mit entsprechendem Stecker zum Anschluss an eine Haushaltssteckdose oder an eine Bordnetzsteckdose eines Land- oder Wasserfahrzeugs umfassen.

Das Energieversorgungsmodul kann einen Ausgang zum Anschluss weiterer Energieverbraucher umfassen. Wenn das Energieversorgungsmodul so dimensioniert wird, dass nicht seine gesamte Leistung von dem Grillgerät benötigt wird, kann es vorteilhaft zur Versorgung weiterer Verbraucher genutzt werden. Dazu weist das Energieversorgungsmodul einen Ausgang, vorteilhafterweise in Form zumindest einer Haushalts- und/oder Bordnetzsteckdose, auf, an den beispielsweise Kühlgeräte für das Grillgut und/oder Unterhaltungselektronikgeräte angeschlossen werden können.

Das Grillgerät kann zumindest ein Beleuchtungsmodul mit zumindest einer Lichtquelle zur Beleuchtung des Grillgeräts und/oder des Grillguts umfassen, wobei die Grillgutträgerfunktionsgruppe und/oder eine Gehäusefunktionsgruppe des Grillgeräts vorzugsweise eine Anzahl von Befestigungselementen zur lösbaren Befestigung, und insbesondere eine Führungsvorrichtung zur Führung, des Beleuchtungsmoduls an der jeweiligen Funktionsgruppe umfasst. Daraus ergeben sich analoge Vorteile und Ausgestaltungsmöglichkeiten wie durch die vorgenannten Befestigungselemente und die vorgenannte Führungsvorrichtung für das Heizmodul.

Erfindungsgemäß kann jeder, auch ein herkömmlicher, Grill mit dem Beleuchtungsmodul ausgerüstet werden.

Ein Beleuchtungsmodul mit einer Lichtquelle, beispielsweise mit zumindest einer LED-Leuchte, erlaubt es dem Benutzer vorteilhafterweise, die Grillvorrichtung auch bei geringer Umgebungshelligkeit sicher zu bedienen.

Das Grillgerät kann zumindest einen Lichtwellenleiter, insbesondere ein Glasfaserkabel, zur Leitung von Licht von der zumindest einen Lichtquelle des Beleuchtungsmoduls auf das Grillgut umfassen. Ein Lichtwellenleiter erlaubt es beispielsweise, Licht von einer, insbesondere hitzeempfindlichen, Lichtquelle, die von einem Garraum des Grillgeräts thermisch isoliert ist, in den Garraum zu leiten. Auf diese Weise ist es möglich, Grillgut in dem Garraum zu beleuchten, ohne die Lebensdauer der Lichtquelle, beispielsweise einer LED-Leuchte, durch Hitzeeinwirkung zu reduzieren. Dazu sind die Lichtwellenleiter, zumindest in einem hitzeexponierten Abschnitt, vorzugsweise in einem in Grillgeräten typischen Temperaturbereich hitzeresistent ausgebildet.

Denkbar ist zusätzlich oder alternativ, dass das Beleuchtungsmodul in einem relativ kühlen Abschnitt des Grillgeräts angeordnet ist und Licht auf eine Anzahl von vorzugsweise hitze- und/oder schmutzresistenten und ggf. verstellbaren optischen Elementen zur Reflektion und/oder Diffusion von Licht, wie beispielsweise einen, ggf. gekrümmten und/oder schwenkbaren Spiegel, richtet, welche das Licht auf eine Grillgutposition im Grillgerät richtet und sie ausleuchtet. Bevorzugt sind die optischen Elemente in Abschnitten eines Garraumes des Grillgeräts angeordnet, an denen der Schmutzeintrag im Grillbetrieb, wie beispielsweise durch Fettspritzer, reduziert ist.

Das Grillgerät kann zumindest ein Steuerungsmodul zur Überwachung, Steuerung und/oder Regelung eines Garvorgangs des Grillguts, wobei die Grillgutträgerfunktionsgruppe und/oder eine Gehäusefunktionsgruppe des Grillgeräts vorzugsweise eine Anzahl von Befestigungselementen zur lösbaren Befestigung, und insbesondere eine Führungsvorrichtung zur Führung, des Steuerungsmoduls an der jeweiligen Funktionsgruppe umfasst. Daraus ergeben sich analoge Vorteile und Ausgestaltungsmöglichkeiten wie durch die vorgenannten Befestigungselemente und die vorgenannte Führungsvorrichtung für das Heizmodul.

Erfindungsgemäß kann jeder, auch ein herkömmlicher, Grill mit dem Steuerungsmodul ausgerüstet werden.

Das Steuerungsmodul kann dazu ausgelegt sein, die Rotationsgeschwindigkeit des Antriebsmoduls und/oder die Heizleistung des Heizmoduls, bevorzugt elektronisch, besonders bevorzugt programmiert, zu regeln. Das zum Beispiel als Mikrocomputer ausgeführte Steuerungsmodul erlaubt es vorteilhafterweise alle für einen optimalen Grillvorgang relevanten Parameter zentral zu steuern.

Das Steuerungsmodul kann dazu ausgelegt sein, Programme für die Zubereitung unterschiedlicher Grillgüter aus einer Datenbank abzurufen, und daraufhin das Grillgerät automatisch für ein optimales Grillergebnis zu steuern. Das Steuerungsmodul kann ferner zur Aufzeichnung benutzerdefinierter Programme ausgelegt sein.

Das Steuerungsmodul kann zumindest ein Anzeige- und/oder Bedienelement umfassen, das zur Einstellung und/oder Anzeige eines Betriebszustandes zumindest des zumindest einen Heizmoduls, des Antriebsmoduls, des Energieversorgungsmoduls, des Beleuchtungsmoduls und/oder des Steuerungsmoduls ausgelegt ist.

Ein Bedienelement kann beispielsweise als Schalter, Drehregler oder Schieberegler oder auch als vorzugsweise drahtlose Schnittstelle zu einem Datenverarbeitungsgerät mit virtuellen Bedienflächen, beispielsweise einer App eines Mobiltelefons, ausgestaltet sein. Ein Anzeigeelement kann beispielsweise als Zeigerinstrument, Digitalanzeige, Kontrollleuchte oder Bildschirm ausgestaltet sein. Bedienelement und Anzeigeelement können auch in einem Bedien- und Anzeigeelement, beispielsweise in Form eines berührungsempfindlichen Bildschirms, verbunden sein.

Unter Betriebszustand werden beispielsweise Heizleistung, Gaszufluss und/oder Temperatur des Heizmoduls; Rotationsgeschwindigkeit des Antriebsmoduls und/oder Ladezustand, Leistungsaufnahme und/oder Leistungsabgabe des Energieversorgungsmoduls verstanden.

Über das Bedien- und/oder Anzeigeelement können beispielsweise vordefinierte Grillprogramme ausgewählt, gestartet und überwacht werden, und/oder der Benutzer kann eigene Grillprogramme definieren.

Durch eine vorteilhafte Anbringung von Bedien- und/oder Anzeigeelementen an der Gehäusefunktionsgruppe, insbesondere an der dem Benutzer zugewandten Seite, sind diese für den Benutzer während des Betriebs der Grillvorrichtung einfach und komfortabel zu erreichen beziehungsweise abzulesen.

Das Steuerungsmodul kann zur Regelung eines Grillvorgangs bei einem idealen Grillparameter oder Grillparameterverlauf ausgestaltet sein. Ein Grillparameter bzw. Grillparameterverlauf kann sich beispielsweise auf Temperatur, Luftstrom und/oder Luftfeuchtigkeit im Garraum beziehen. Durch ein Steuerungsmodul kann insbesondere in die Regelung eingegriffen werden, entweder manuell oder durch Eingabe eines Parameterprofils.

Denkbar ist beispielsweise, über ein Smartphone oder ein im Grill integriertes Modul ein ideales Parameterprofil für gefülltes Hähnchen herunterzuladen und über eine App das Grillgerät entsprechend zu steuern. Vorzugsweise gibt das Steuerungsmodul beispielsweise akustische und/oder optische Handlungsanweisungen über entsprechende Signalgeber aus, damit auch ein ungeschulter oder abgelenkter Grillgerätbediener optimale Grillergebnisse erzielen kann. Solche Signalgeber können beispielsweise auch ein Freigabesignal abgeben, ab dem es zum Beispiel ohne Verbrennungsgefahr möglich und sicher ist, das Grillgerät nach Nutzung zu transportieren und/oder von der Grillkonfiguration in die Tragekonfiguration umzubauen.

Das Steuerungsmodul kann zumindest eine Kamera zur Abbildung des Grillguts umfassen. Durch die Kamera, beispielsweise eine digitale Videokamera, kann vorteilhafterweise ein Bild des Grillguts aufgenommen und, beispielsweise mit dem Anzeigeelement, dargestellt werden. Dadurch ist es möglich, den Garvorgang des Grillguts zu überwachen, ohne dafür das Grillgerät öffnen zu müssen oder schwere und/oder zerbrechliche Fenster vorsehen zu müssen.

Das Grillgerät kann einen Bildleiter, beispielsweise ein Glasfaserkabel, umfassen, der dazu ausgelegt ist, ein Bild des Grillguts zu der Kamera zu leiten. Dadurch ist es möglich, dass die Kamera thermisch von dem Garraum und insbesondere von einer Wärmequelle des Grillgeräts isoliert angeordnet ist und trotzdem Bilder des Grillguts aufnehmen kann. Dadurch wird die Kamera vor zu starker Hitzeeinwirkung geschützt, wodurch sich ihre Lebensdauer erhöht.

Das Steuerungsmodul kann zumindest ein Kommunikationselement zum, bevorzugt drahtlosen, Austausch, von Mess- und/oder Steuerdaten mit einem mobilen Kommunikationsgerät umfassen. Bei dem mobilen Kommunikationsgerät kann es sich beispielsweise um ein Smartphone oder einen Tablet-Computer handeln, auf dem ein Programm zur Überwachung, Steuerung und/oder Regelung eines Grillvorgangs des Grillgeräts installiert ist. In dieser Ausgestaltung kann das mobile Kommunikationsgerät als Anzeige- und/oder Bedienelement für das Grillgerät dienen. Insbesondere kann das von der Kamera aufgenommene Bild des Grillguts, vorzugsweise kontinuierlich, an das mobile Kommunikationsgerät übertragen und davon angezeigt werden.

Durch das Kommunikationselement ergibt sich der Vorteil, dass das Grillgerät auch ohne unmittelbaren Kontakt zwischen dem Benutzer und dem Grillgerät überwacht und/oder gesteuert werden kann. Beispielsweise kann ein Benutzer so gleichzeitig Beilagen zu einem Grillgut in einer Küche vorbereiten und den Garvorgang des Grillguts in einem im Freien aufgestellten Grill überwachen.

Das Steuerungsmodul kann zumindest ein Thermometer und/oder Feuchtigkeitsmesser zur Messung einer Temperatur bzw. Luftfeuchtigkeit am Grillgut und/oder im Garraum des Grillgeräts umfassen. Das Thermometer ist bevorzugt lösbar an dem zumindest einen Grillgutträger und/oder dem Halteelement fixierbar. Das Thermometer kann eine eigene Temperaturanzeige umfassen und/oder die gemessene Temperatur über Kabel oder per Funk an das Steuerungsmodul und/oder ein Anzeigeelement des Grillgeräts übermitteln. Das Thermometer kann beispielsweise über eine Klemm-, Schraub- oder Steckverbindung lösbar fixiert werden.

Mit Hilfe des Thermometers kann vorteilhaft überprüft werden, ob die Temperatur im Bereich des Grillguts der für das Grillgut optimalen Grilltemperatur entspricht. Wenn die Temperatur nicht optimal ist, können ein Bediener des Grills und/oder das Steuerungsmodul beispielsweise die Heizleistung der Heizfunktionsgruppe und/oder einen Abstand des Grillgutträgers zur Abstrahlfläche der Heizfunktionsgruppe so regeln, dass die optimale Temperatur erreicht wird.

Besonders vorteilhaft kann das Thermometer als Kerntemperaturmessfühler ausgestaltet sein. Das Thermometer kann beispielsweise an einem Grillgutträger angeordnet sein und/oder durch eine Datenleitung mit dem Steuerungsmodul verbunden sein. Insbesondere kann die Datenleitung zumindest einen Schleifkontakt umfassen. Ein Schleifkontakt hat den Vorteil, dass dadurch auf einfache Weise eine zuverlässige Datenübertragung zwischen einem bewegten Thermometer, das beispielsweise an einem, insbesondere gedrehten, Grillgutträger angeordnet ist, und einem ortsfesten Steuerungsmodul ermöglicht wird.

Das Steuerungsmodul kann zumindest eine Uhr zur Messung einer Garzeit des Grillguts und/oder zumindest eine Zeitschaltuhr zur Steuerung einer Garzeit des Grillguts umfassen. Die Uhr ist vorteilhafterweise zusammen mit Bedien- und/oder Anzeigeelementen an der Gehäusefunktionsgruppe angebracht oder in die Bedien- und/oder Anzeigeelemente integriert. Über die Uhr kann ein Bediener des Grillgeräts die Grillzeit des Grillgutes überwachen und den Grillvorgang im Fall einer Zeitschaltuhr auch automatisch beginnen und/oder beenden lassen.

Das Steuerungsmodul kann ein fernablesbares Anzeigeelement zur Anzeige eines Betriebszustands des Grillgeräts und/oder eines Garzustands des Grillguts umfasst, wobei das Anzeigeelement bevorzugt zumindest eine farbveränderliche Lichtquelle umfasst. Die Lichtquelle kann beispielsweise eine Anzahl von LED-Leuchten umfassen und/oder durch ein Ampelsystem ob Parameter zum Betriebszustand und/oder Garzustand, beispielsweise eine Kerntemperatur des Grillguts, eine Garraumtemperatur und/oder eine Garzeit, in einem zugehörigen Soll-Bereich liegen.

Das Grillgerät kann zumindest ein Aromamodul zur kontrollierten Freisetzung von Aromastoffen aus einem Reservoir in einen Garraum des Grillgeräts umfassen, wobei die Heizfunktionsgruppe, die Grillgutträgerfunktionsgruppe und/oder eine Gehäusefunktionsgruppe des Grillgeräts vorzugsweise eine Anzahl von Befestigungselementen zur lösbaren Befestigung, und insbesondere eine Führungsvorrichtung zur Führung, des Aromamoduls an der jeweiligen Funktionsgruppe umfasst. Daraus ergeben sich analoge Vorteile und Ausgestaltungsmöglichkeiten wie durch die vorgenannten Befestigungselemente und die vorgenannte Führungsvorrichtung für das Heizmodul.

Das Aromamodul erlaubt eine Vielzahl zusätzlicher Zubereitungsmöglichkeiten für das Grillgut. Erfindungsgemäß kann jedes, auch ein herkömmliches, Grillgerät mit dem Aromamodul ausgestattet werden.

Die kontrollierte Freisetzung kann beispielsweise durch Erhitzen eines, beispielsweise festen oder flüssigen, Aromaträgers in dem Reservoir erfolgen, wobei die Aromastoffe aus dem Aromaträger verdampfen oder sublimieren. Ferner kann die Freisetzung durch zumindest ein Ventil gesteuert werden. Die Freisetzung kann beispielsweise von dem Steuerungsmodul gesteuert werden.

Das Grillgerät kann ein Aufsatzmodul zum Aufsetzen auf das Grillgerät umfassen, wobei das Aufsatzmodul bevorzugt zumindest eine Ablagefläche zum Garen und/oder Warmhalten des Grillguts umfasst. In ihrer Ausgestaltung und ihren Vorteilen kann die Ablagefläche der oben beschriebenen Ablagefläche des Deckenelements entsprechen. Wird die Ablagefläche von einem Aufsatzmodul umfasst, ergibt sich daraus der Vorteil einer höheren Vielseitigkeit, da je nach Einsatzzweck unterschiedliche Aufsatzmodule auf das Grillgerät aufgesetzt werden können.

Das Grillgerät kann zumindest ein Servicegerät umfassen, das ausgewählt ist aus einem Heißluftgebläse zum Erhitzen eines Festbrennstoffs und/oder des Grillguts; einem Staubsauger zum Aufsaugen von Verbrennungsrückständen eines Festbrennstoffs; und einem Kühlgerät zum Kühlen des Grillguts. Durch ein Servicegerät erhält das Grillgerät weitere nützliche Funktionen. Das Servicegerät und das Energieversorgungsmodul können zueinander passende Anschlüsse, beispielsweise Stecker und Steckdose, zur Versorgung des Servicegerätes durch das Energieversorgungsmodul mit Energie umfassen.

Zusammengefasst überkommt die vorliegende Erfindung die Nachteile bekannter Grillvorrichtungen durch einen modular aufgebauten Grill, dessen Module eindeutig und einfach zu einem Grill zu verbinden sind, wobei sich die Module zu einem auf verschiedene Nutzungsarten ausgelegten Grill kombinieren lassen.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.

Es zeigen:

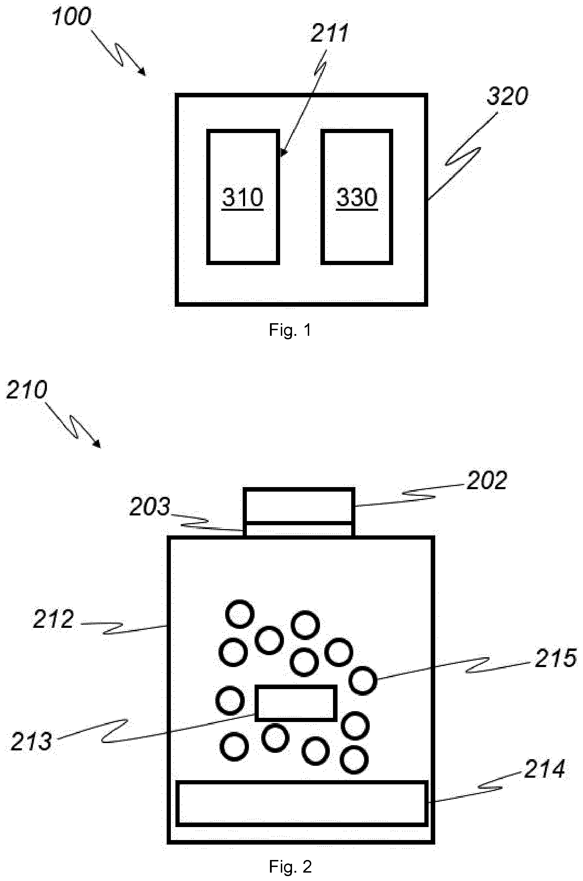

[Fig.1] eine schematische Darstellung eines erfindungsgemäßen Grillgeräts;
[Fig.2] eine schematische Ansicht eines erfindungsgemäßen Heizmoduls;
[Fig.3] eine schematische Schnittdarstellung einer erfindungsgemäßen Gehäusefunktionsgruppe;
[Fig.4] eine perspektivische Skizze einer erfindungsgemäßen Gehäusefunktionsgruppe und

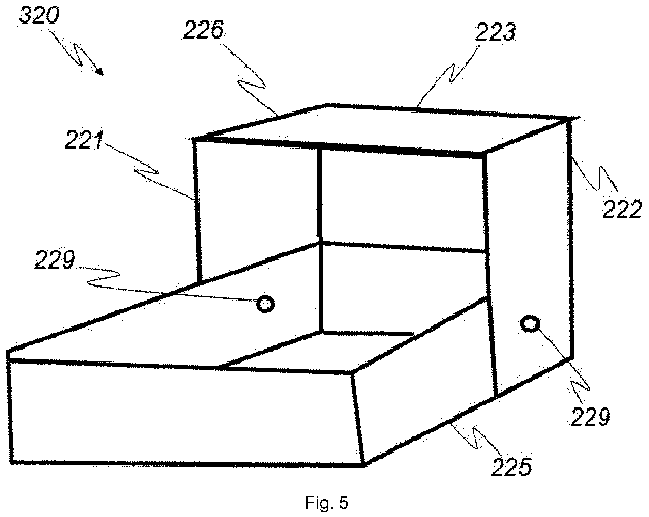

[Fig.5] eine perspektivische Skizze einer weiteren erfindungsgemäßen Gehäusefunktionsgruppe.

### Fig.1

zeigt eine schematische Darstellung eines erfindungsgemäßen Grillgeräts 100. Das dargestellte Grillgerät 100 umfasst eine Heizfunktionsgruppe 310, eine Grillgutträgerfunktionsgruppe 330 und eine Gehäusefunktionsgruppe 320. Die Heizfunktionsgruppe 310 umfasst ein Heizmodul mit einer Abstrahlfläche 211 zur Abstrahlung von Wärme auf das von der Grillgutträgerfunktionsgruppe 330 getragene Grillgut, wobei in der dargestellten Grillkonfiguration des Grillgeräts 100 die Abstrahlfläche 211 vertikal ausgerichtet und die Grillgutträgerfunktionsgruppe 330 vor der Abstrahlfläche 211 angeordnet ist

### Fig.2

zeigt eine schematische Ansicht eines erfindungsgemäßen Heizmoduls 210. Die Ansicht ist beispielsweise auf eine in der Papierebene liegende Abstrahlfläche des Heizmoduls 210 gerichtet. Vorteilhafterweise ist die Tiefe des Heizmoduls 210 orthogonal zur Papierebene geringer als seine Ausdehnung in der Papierebene.

Das dargestellte Heizmodul 210 umfasst einen Festbrennstoff 215, beispielsweise Holzkohlebriketts, der von einer Umhüllung 212, beispielsweise einem Metallkorb, eingeschlossen ist. Das Heizmodul 210 umfasst eine, insbesondere innerhalb des Festbrennstoffs 215 angeordnete, Zündvorrichtung 213, beispielsweise einen elektrischen Grillanzünder, für den Festbrennstoff 215 und eine, insbesondere unterhalb des Festbrennstoffs 215 angeordnete, Auffangvorrichtung 214, beispielsweise eine Metallwanne, für Verbrennungsrückstände des Festbrennstoffs 215.

Das dargestellte Heizmodul 210 umfasst ein, insbesondere an einer Oberseite des Heizmoduls 210 angeordnetes, Griffelement 202 zum Tragen des Heizmoduls 210. Zwischen dem Griffelement 202 und dem Festrennstoff 215 ist ein Isoliermittel 203, beispielsweise ein, insbesondere aufgeschäumter, hitzebeständiger Kunststoff angeordnet, damit sich das Griffelement 202 im Betrieb des Heizmoduls 210 nicht zu stark erwärmt.

### Fig.3

zeigt eine schematische Schnittdarstellung einer erfindungsgemäßen Gehäusefunktionsgruppe 320. Die Gehäusefunktionsgruppe 320 umfasst ein linkes Seitenwandelement 221, ein rechtes Seitenwandelement 222, ein Bodenelement 225 und ein Deckenelement 226, die den Garraum 110 des Grillgeräts umschließen. Die Schnittebene der Darstellung verläuft parallel zu einem Rückwandelement (nicht dargestellt) des Gehäusemoduls 220.

Die dargestellten Gehäuseelemente 221, 222, 225, 226 sind durch Gelenke 229 (nur exemplarisch beschriftet), beispielsweise Scharniere, miteinander verbunden. Ferner umfassen auch das linke Seitenwandelement 221 und das rechte Seitenwandelement 222 jeweils eine Gelenk 229 (nur exemplarisch beschriftet), wodurch die Seitenwandelemente 221, 222 faltbar ausgestaltet sind.

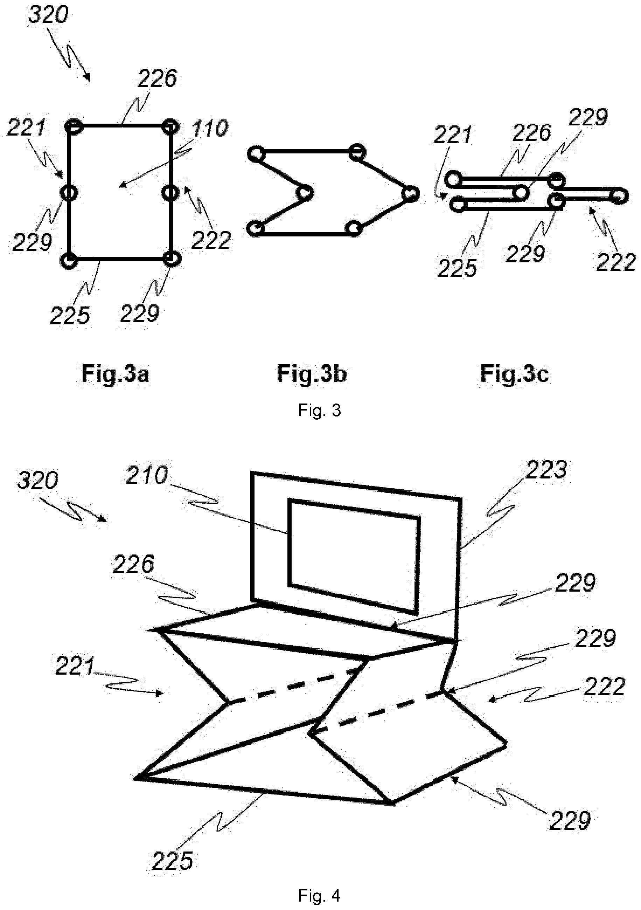

Durch die Gelenke 229 ist es möglich, das Gehäusemodul 220 von der Grillkonfiguration (Fig. 3a) in eine platzsparend zusammengefaltete Tragekonfiguration (Fig. 3c) zu überführen. Figur 3b zeigt einen Zwischenzustand zwischen der Grillkonfiguration und der Tragekonfiguration, wobei der Übersichtlichkeit halber keine Beschriftung angegeben ist.

### Fig.4

zeigt eine perspektivische Skizze einer erfindungsgemäßen Gehäusefunktionsgruppe 320. Wie die Gehäusefunktionsgruppe 320 aus Figur 3 umfasst auch die hier dargestellte Gehäusefunktionsgruppe 320 ein linkes Seitenwandelement 221, ein rechtes Seitenwandelement 222, ein Bodenelement 225 und ein Deckenelement 226. Ferner ist auch ein Rückwandelement 223 dargestellt, das als Heizfunktionsgruppe ausgebildet ist und ein Heizmodul 210, beispielsweise einen Elektroheizstrahler, umfasst.

Die dargestellten Gehäuseelemente 221, 222, 223, 225, 226 sind durch Gelenke 229 (nur exemplarisch beschriftet), beispielsweise Scharniere, miteinander verbunden. Ferner umfassen auch das linke Seitenwandelement 221 und das rechte Seitenwandelement 222 jeweils ein Gelenk 229 (gestrichelt dargestellt, nur exemplarisch beschriftet), wodurch die Seitenwandelemente 221, 222 faltbar ausgestaltet sind. Analog zu Figur 3b zeigt Figur 4 einen Zwischenzustand zwischen der Grillkonfiguration und der Tragekonfiguration des Gehäusemoduls 220.

Um von der Grillkonfiguration in die Tragekonfiguration zu gelangen, kann das Rückwandelement 223 um ein Gelenk 229 an einer rückwärtigen Kante des Deckenelements 226 auf das Deckenelement 226 geklappt werden. Analog könnte das Rückwandelement 223 auch um ein Gelenk (nicht dargestellt) an einer rückwärtigen Kante des Bodenelements 225 unter das Bodenelement 225 geklappt werden. Ein Vorderwandelement (nicht dargestellt) könnte ebenso wie das Rückwandelement 223 geklappt werden.

### Fig.5

zeigt eine perspektivische Skizze einer weiteren erfindungsgemäßen Gehäusefunktionsgruppe 320 in der Grillkonfiguration. In der dargestellten Ausgestaltung sind das linke Seitenwandelement 221, das rechte Seitenwandelement 222, das Deckenelement 226 und das Rückwandelement 223 starr miteinander verbunden.

Die vorgenannten Gehäuseelemente 221, 222, 223, 226 sind über zwei Gelenke 229 mit dem Bodenelement 225 verbunden, das im dargestellten Beispiel, beispielsweise zur Aufnahme der Grillgutträgerfunktionsgruppe (nicht dargestellt), wannenartig ausgestaltet ist. Durch die Gelenke 229 lässt sich das Bodenelement 225 in der Tragekonfiguration des Gehäusemoduls 220 platzsparend in den von den Seitenwandelementen 221, 222, dem Deckenelement 226 und dem Rückwandelement 223 umschlossenen Garraum einklappen.

### Liste der Bezugszeichen

- 100: Grillgerät
- 110: Garraum
- 202: Griffelement
- 203: Isoliermittel
- 210: Heizmodul
- 211: Abstrahlfläche
- 212: Umhüllung
- 213: Zündvorrichtung
- 214: Auffangvorrichtung
- 215: Festbrennstoff
- 221: linkes Seitenwandelement
- 222: rechtes Seitenwandelement
- 223: Rückwandelement
- 225: Bodenelement
- 226: Deckenelement
- 229: Gelenk
- 310: Heizfunktionsgruppe
- 320: Gehäusefunktionsgruppe
- 330: Grillgutträgerfunktionsgruppe

## Patentansprüche

1. Modulares Grillgerät (100) mit zumindest
a) einer Grillkonfiguration zum Grillen von Grillgut und einer Tragekonfiguration zum Tragen des Grillgeräts (100),
b) einer Heizfunktionsgruppe (310),
c) einem austauschbaren Heizmodul (210) zum Erhitzen des Grillguts mit einer in der Grillkonfiguration vertikalen Abstrahlfläche (211) und
d) einer mit der Heizfunktionsgruppe (310) verbundenen Grillgutträgerfunktionsgruppe (330) mit einem Grillgutträgermodul,
wobei die Heizfunktionsgruppe (310) zumindest
e) eine Führungsvorrichtung zur Führung des Heizmoduls (210) und
f) eine Anzahl von Befestigungselementen zur lösbaren Befestigung des Heizmoduls (210) an der Heizfunktionsgruppe (310) umfasst,
und das Grillgutträgermodul zumindest
g) einen in der Grillkonfiguration vor der Abstrahlfläche (211) um eine vertikale Drehachse drehbar gelagerten Grillgutträger zur Aufnahme des Grillguts umfasst,
**dadurch gekennzeichnet dass**
das Heizmodul (210) zumindest ein Anschlusselement zum elektrisch leitenden Anschluss des Heizmoduls (210) an ein zu dem Anschlusselement komplementäres Gegenelement der Heizfunktionsgruppe (310) für die Übertragung elektrischer Steuersignale und/oder Messsignale und/oder eines elektrischen Versorgungsstroms umfasst.

2. Grillgerät (100) nach Anspruch 1,
**dadurch gekennzeichnet, dass**
die Heizfunktionsgruppe (310) und die Grillgutträgerfunktionsgruppe (330) über eine Anzahl von Verbindungselementen lösbar miteinander verbunden sind, wobei die Verbindungselemente bevorzugt zur beweglichen Verbindung der Heizfunktionsgruppe (310) mit der Grillgutträgerfunktionsgruppe (330) ausgelegt sind.

3. Grillgerät (100) nach Anspruch 1 oder 2,
**dadurch gekennzeichnet, dass**
die Grillgutträgerfunktionsgruppe (330) eine Anzahl von Befestigungselementen zur lösbaren Befestigung des Grillgutträgermoduls an der Grillgutträgerfunktionsgruppe (330) und bevorzugt eine Führungsvorrichtung zur Führung des Grillgutträgermoduls umfasst.

4. Grillgerät (100) nach einem der Ansprüche 1 bis 3 **dadurch gekennzeichnet, dass**
a) das Anschlusselement als Buchse und das Gegenelement als zu der Buchse komplementärer Stecker ausgebildet ist und/oder
b) das Gegenelement in die Führungsvorrichtung der Heizfunktionsgruppe integriert ist.

5. Grillgerät (100) nach einem der Ansprüche 1 bis 4,
**dadurch gekennzeichnet, dass**
das Heizmodul (210) einen Festbrennstoff (215) und eine den Festbrennstoff (215) einschließende Umhüllung (212) umfasst, wobei die Umhüllung (212)
a) zumindest im Bereich der Abstrahlfläche (211) wärmedurchlässig ist und
b) eine Anzahl von verstellbaren Belüftungsöffnungen an einer einem Garraum (110) des Grillgeräts (100) in der Grillkonfiguration zugewandten und/oder dem Garraum (110) in der Grillkonfiguration abgewandten Seite des Heizmoduls (210) umfasst.

6. Grillgerät (100) nach einem der Ansprüche 1 bis 5,
**dadurch gekennzeichnet, dass**
das Heizmodul (210) eine, bevorzugt elektrische, Zündvorrichtung (213) zum Entzünden eines Brennstoffs umfasst.

7. Grillgerät (100) nach einem der Ansprüche 1 bis 6,
**gekennzeichnet durch**
eine zumindest einen Garraum (110) des Grillgerätes (100) umschließende Gehäusefunktionsgruppe (320), wobei die Gehäusefunktionsgruppe bevorzugt
a) über eine Anzahl von Verbindungselementen lösbar mit der Heizfunktionsgruppe (310) und/oder der Grillgutträgerfunktionsgruppe (330) verbunden ist,
b) eine Mehrzahl von Gehäuseelementen (221, 222, 223, 224, 225, 226) umfasst, wobei zumindest eines der Gehäuseelemente (221, 222, 223, 224, 225, 226) faltbar ausgestaltet und/oder klappbar mit einem weiteren Gehäuseelement (221, 222, 223, 224, 225, 226) verbunden ist, und/oder
c) eine Anzahl von verstellbaren Belüftungsöffnungen umfasst.

8. Grillgerät (100) nach einem der Ansprüche 1 bis 7,
**dadurch gekennzeichnet, dass**
der zumindest eine Grillgutträger
a) lösbar und/oder höhenverstellbar an einem Halteelement befestigt ist und/oder
b) exzentrisch zu der Drehachse an einem, bevorzugt L-förmigen, Halteelement befestigt ist.

9. Grillgerät (100) nach einem der Ansprüche 1 bis 8,
**gekennzeichnet durch**
zumindest ein Antriebsmodul zur Drehung des zumindest einen Grillgutträgers um die Drehachse umfasst, wobei die Grillgutträgerfunktionsgruppe (330) eine Anzahl von Befestigungselementen zur lösbaren Befestigung des Antriebsmodul an der Grillgutträgerfunktionsgruppe (310) umfasst.

10. Grillgerät (100) nach einem der Ansprüche 1 bis 9,
**gekennzeichnet durch**
zumindest ein Energieversorgungsmodul zur Versorgung zumindest einer Funktionsgruppe des Grillgeräts (100) mit Energie, wobei die Grillgutträgerfunktionsgruppe (330) eine Anzahl von Befestigungselementen zur lösbaren Befestigung des Energieversorgungsmoduls an der Grillgutträgerfunktionsgruppe (310) umfasst.

11. Grillgerät (100) nach einem der Ansprüche 1 bis 10,
**gekennzeichnet durch**
zumindest ein Beleuchtungsmodul mit zumindest einer Lichtquelle zur Beleuchtung des Grillgeräts (100) und/oder des Grillguts, wobei die Grillgutträgerfunktionsgruppe (330) und/oder eine Gehäusefunktionsgruppe des Grillgeräts (100) eine Anzahl von Befestigungselementen zur lösbaren Befestigung des Beleuchtungsmoduls an der jeweiligen Funktionsgruppe umfasst.

12. Grillgerät (100) nach Anspruch 11,
**gekennzeichnet durch**
zumindest einen Lichtwellenleiter zur Leitung von Licht von der zumindest einen Lichtquelle des Beleuchtungsmoduls auf das Grillgut.

13. Grillgerät (100) nach einem der Ansprüche 1 bis 12
**gekennzeichnet durch**
zumindest ein Steuerungsmodul zur Überwachung, Steuerung und/oder Regelung eines Garvorgangs des Grillguts, wobei die Grillgutträgerfunktionsgruppe (330) und/oder eine Gehäusefunktionsgruppe des Grillgeräts (100) eine Anzahl von Befestigungselementen zur lösbaren Befestigung des Steuerungsmoduls an der jeweiligen Funktionsgruppe umfasst.

14. Grillgerät (100) nach Anspruch 13,
**dadurch gekennzeichnet, dass**
das Steuerungsmodul zumindest ein Kommunikationselement zum drahtlosen Austausch von Mess- und/oder Steuerdaten mit einem mobilen Kommunikationsgerät umfasst, wobei das Steuerungsmodul bevorzugt zumindest eine Kamera zur Abbildung des Grillguts umfasst, wobei das Grillgerät besonders bevorzugt einen Bildleiter zur Leitung eines Bildes des Grillguts zu der Kamera umfasst.

15. Grillgerät (100) nach Anspruch 13 oder 14,
**dadurch gekennzeichnet, dass**
das Steuerungsmodul ein fernablesbares Anzeigeelement zur Anzeige eines Betriebszustands des Grillgeräts (100) und/oder eines Garzustands des Grillguts umfasst, wobei das Anzeigeelement bevorzugt zumindest eine farbveränderliche Lichtquelle umfasst.

## Claims

1. Modular grill device (100) comprising at least
a. a grill configuration for grilling food and a carrying configuration for carrying the grill device (100),
b. a heating function group (310),
c. an exchangeable heating module (210) for heating the food with radiating surface (211) being vertical in the grill configuration and
d. a food carrier function group (330) connected to the heating function group (310),
the food carrier function group (330) comprising a food carrier module, wherein the heating function group (310) comprises at least
e. a guide device for guiding the heating module (210) and
f. a number of fastening elements for detachable fastening of the heating module (210) to the heating function group (310),
wherein the food carrier module comprises at least
g. a food carrier for receiving the food mounted rotatably about a vertical axis of rotation in front of the radiating surface (211) in the grill configuration,
**characterized in that**
h. the heating module (210) comprises at least one connection element for the electrically conductive connection of the heating module (210) to a counter element of the heating function group (310) for the transmission of electrical control signals and/or measuring signals and/or an electrical supply current, the counter element being complementary to the connection element.

2. Grill device (100) according to claim 1,
**characterized in that**
the heating function group (310) and the food carrier function group (330) are detachably connected to one another via a number of connecting elements, the connecting elements preferably being designed for the movable connection of the heating function group (310) with the food carrier function group (330).

3. Grill device (100) according to claim 1 or 2,
**characterized in that**
the food carrier function group (330) comprises a number of fastening elements for releasably attaching the food carrier module to the food carrier function group (330) and preferably a guide device for guiding the food carrier module.

4. Grill device (100) according to one of claims 1 to 3,
**characterized in that**
a. the connection element is designed as a socket and the counter element as a plug complementary to the socket and/or
b. the counter element is integrated in the guide device of the heating function group (310).

5. Grill device (100) according to one of claims 1 to 4,
**characterized in that**
the heating module (210) comprises a solid fuel (215) and a casing (212) enclosing the solid fuel (215), the casing (212)
a. being heat-permeable at least in the region the radiating surface (211) and
b. comprising a number of adjustable ventilation openings on a side of the heating module (210) facing a cooking space (110) of the grill device (100) in the grill configuration and / or facing away from the cooking space (110) in the grill configuration.

6. Grill device (100) according to one of claims 1 to 5,
**characterized in that**
the heating module (210) comprises a, preferably electrical, ignition device (213) for igniting a fuel.

7. Grill device (100) according to one of claims 1 to 6,
**characterized by**
a housing function group (320) enclosing at least a cooking space (110) of the grill device (100), the housing function group (320) preferably
a. being releasably connected with the heating function group (310) and / or the food carrier function group (330) via a number of connecting elements,
b. comprising a plurality of housing elements (221, 222, 223, 224, 225, 226), at least one of the housing elements (221, 222, 223, 224, 225, 226) being foldable and / or being hingedly connected to a further housing element (221, 222, 223, 224, 225, 226), and / or
c. comprising a number of adjustable ventilation openings.

8. Grill device (100) according to one of claims 1 to 7,
**characterized in that**
the at least one food carrier
a. is detachably and / or height-adjustable attached to a holding element and / or
b. is attached eccentrically to the axis of rotation on a, preferably L-shaped, holding element.

9. Grill device (100) according to one of claims 1 to 8,
**characterized by**
at least one drive module for rotating the at least one food carrier around the axis of rotation, the food carrier function group (330) comprising a number of fastening elements for releasably fastening the drive module to the food carrier function group (310).

10. Grill device (100) according to one of claims 1 to 9,
**characterized by**
at least one power supply module for supplying at least one functional group of the grill device (100) with energy, the food carrier function group (330) having a number of fastening elements for the detachable fastening of the power supply module to the food carrier function group (310).

11. Grill device (100) according to one of claims 1 to 10,
**characterized by**
at least one lighting module with at least one light source for illuminating the grill device (100) and / or the food, wherein the food carrier function group (330) and / or a housing function group of the grill device (100) comprises a number of fastening elements for releasably fastening the lighting module to the respective functional group.

12. Grill device (100) according to claim 11,
**characterized by**
at least one optical waveguide for guiding light from the at least one light source of the lighting module to the food.

13. Grill device (100) according to one of claims 1 to 12,
**characterized by**
at least one control module for monitoring, controlling and / or regulating a cooking process of the food, the food carrier function group (330) and / or a housing function group of the grill device (100) having a number of fastening elements for detachable fastening of the control module to the respective function group.

14. Grill device (100) according to claim 13,
**characterized in that**
the control module comprises at least one communication element for the wireless exchange of measurement and / or control data with a mobile communication device, the control module preferably comprising at least one camera for imaging the food, the grill device comprising particularly preferably an image conductor for conveying an image of the food to the camera.

15. Grill device (100) according to claim 13 or 14,
**characterized in that**
the control module comprises a remotely readable display element for displaying an operating state of the grill device (100) and / or a cooking state of the food, the display element preferably comprising at least one colour-changeable light source.

## Revendications

1. Appareil de barbecue (100) modulaire comprenant au moins
a. une configuration de grillade pour faire griller des aliments et une configuration de transport pour porter l'appareil de barbecue (100),
b. un groupe de fonctions de chauffage (310),
c. un module de chauffage (210) interchangeable pour le chauffage des aliments comprenant une surface rayonnant vertical (211) dans la configuration de grillade et
d. un groupe de fonctions de support d'aliments (330) connecté au groupe de fonctions de chauffage (310), le groupe de fonctions de support d'aliments (330) comprenant un module de support d'aliments, le groupe de fonctions de chauffage (310) comprenant
e. au moins un dispositif de guidage pour guider le module de chauffage (210)
f. un certain nombre d'éléments de fixation pour la fixation amovible du module de chauffage (210) au groupe de fonctions de chauffage (310), et le module de support d'aliments comprenant au moins
g. un support d'aliments pour recevoir les aliments, le support d'aliments étant monté devant la surface rayonnante (211) de façon rotative autour d'un axe de rotation vertical dans la configuration de grillade,
**caractérisé en ce que**
h. le module de chauffage (210) comprend au moins un élément de connexion pour la connexion électriquement conductrice du module de chauffage (210) à un contre-élément du groupe de fonctions de chauffage (310) pour la transmission de signaux électriques de commande et/ou de mesure et/ou d'un courant électrique d'alimentation, le contre-élément étant complémentaire de l'élément de connexion.

2. Appareil de barbecue (100) selon la revendication 1,
**caractérisé en ce que**
le groupe de fonctions de chauffage (310) et le groupe de fonctions de support d'aliments (330) sont reliés l'un à l'autre de manière amovible par un certain nombre d'éléments de liaison, les éléments de liaison étant conçus de préférence pour la connexion articulée du groupe de fonctions de chauffage (310) avec le groupe de fonctions de support d'aliments (330).

3. Appareil de barbecue (100) selon la revendication 1 ou 2,
**caractérisé en ce que**
le groupe de fonctions de support d'aliments (330) comprend un certain nombre d'éléments de fixation pour fixer de manière amovible le module de support d'aliments au groupe de fonctions de support d'aliments (330) et de préférence un dispositif de guidage pour guider le module de support d'aliments.

4. Appareil de barbecue (100) selon l'une des revendications 1 à 3,
**caractérisé en ce que**
a. l'élément de connexion est conçu comme une prise et le contre-élément est conçu comme une fiche complémentaire à la prise, et/ou
b. le contre-élément est intégré dans le dispositif de guidage du groupe de fonctions de chauffage (310).

5. Appareil de barbecue (100) selon l'une des revendications 1 à 4,
**caractérisé en ce que** le module de chauffage (210) comprend un combustible solide (215) et une enveloppe (212) renfermant le combustible solide (215), l'enveloppe (212)
a. étant perméable à la chaleur au moins dans la région de la surface de rayonnement (211) et
b. comprenant un certain nombre d'ouvertures d'aération réglables sur un côté du module de chauffage (210) faisant face à un espace de cuisson (110) de l'appareil de barbecue (100) en configuration de grillade et/ou à l'opposé de l'espace de cuisson (110) en configuration de grillade.

6. Appareil de barbecue (100) selon l'une des revendications 1 à 5,
**caractérisé en ce que**
le module de chauffage (210) comprend un dispositif d'allumage (213), de préférence électrique, pour allumer un combustible.

7. Appareil de barbecue (100) selon l'une des revendications 1 à 6,
**caractérisé par**
un groupe de fonctions de boîtier (320) renfermant au moins un espace de cuisson (110) de l'appareil de barbecue (100), le groupe de fonctions de boîtier (320) de préférence
a. pouvant être raccordé de façon détachable au groupe de fonctions de chauffage (310) et/ou au groupe de fonctions de support d'aliments (330) par l'intermédiaire d'un certain nombre d'éléments de liaison,
b. comprenant une pluralité d'éléments de boîtier (221, 222, 223, 224, 225, 226), au moins l'un des éléments de boîtier (221, 222, 223, 224, 225, 226) pouvant être plié et/ou étant relié de manière articulée à un autre élément de boîtier (221, 222, 223, 224, 225, 226), et/ou
c. comprenant un certain nombre d'ouvertures de ventilation réglables.

8. Appareil de barbecue (100) selon l'une des revendications 1 à 7,
**caractérisé en ce que**
l'au moins un support d'aliments
a. est fixé de manière amovible et/ou réglable en hauteur sur un élément de maintien et/ou
b. est fixé de manière excentrée par rapport à l'axe de rotation sur un élément de maintien, l'élément de maintien étant de préférence en forme de la lettre L.

9. Appareil de barbecue (100) selon l'une des revendications 1 à 8,
**caractérisé par**
au moins un module d'entraînement pour faire tourner l'au moins un support d'aliments autour de l'axe de rotation, le groupe de fonctions de support d'aliments (330) comprenant un certain nombre d'éléments de fixation pour la fixation amovible du module d'entraînement au groupe de fonctions de support d'aliments (310).

10. Appareil de barbecue (100) selon l'une des revendications 1 à 9,
**caractérisé par**
au moins un module d'alimentation pour alimenter en énergie au moins un groupe de fonctions de l'appareil de barbecue (100), le groupe de fonctions de support d'aliments (330) comprenant un nombre d'éléments de fixation pour la fixation amovible du module d'alimentation en énergie au groupe de fonctions de support d'aliments (310).

11. Appareil de barbecue (100) selon l'une des revendications 1 à 10,
**caractérisé par**
au moins un module d'éclairage avec au moins une source lumineuse pour éclairer l'appareil de barbecue (100) et/ou les aliments, le groupe de fonctions de support d'aliments (330) et/ou un groupe de fonctions de boîtier (320) de l'appareil de barbecue (100) comprenant un certain nombre d'éléments de fixation pour la fixation amovible du module d'éclairage au groupe de fonctions respectif.

12. Appareil de barbecue (100) selon la revendication 11,
**caractérisé par**
au moins un guide d'ondes optique pour guider la lumière de l'au moins une source lumineuse du module d'éclairage aux aliments.

13. Appareil de barbecue (100) selon l'une des revendications 1 à 12,
**caractérisé par**
au moins un module de commande pour surveiller, commander et/ou réguler un processus de cuisson des aliments, le groupe de fonctions de support d'aliment (330) et/ou un groupe de fonctions de boîtier (320) de l'appareil de barbecue (100) comprenant un certain nombre d'éléments de fixation pour la fixation amovible du module de commande au groupe de fonctions respectif.

14. Appareil de barbecue (100) selon la revendication 13,
**caractérisé en ce que**
le module de commande comprend au moins un élément de communication pour l'échange sans fil de données de mesure et/ou de contrôle avec un dispositif de communication mobile, le module de commande comprenant de préférence au moins une caméra pour l'imagerie des aliments, l'appareil de barbecue (100) comprenant de manière particulièrement préférée un conducteur d'image pour transmettre une image de l'aliment à la caméra.

15. Appareil de barbecue (100) selon la revendication 13 ou 14,
**caractérisé en ce que**
le module de commande comprend un élément d'affichage lisible à distance pour afficher un état de fonctionnement de l'appareil de barbecue (100) et/ou un état de cuisson des aliments, l'élément d'affichage comprenant de préférence au moins une source lumineuse à couleur variable.
